# EUROPEAN PATENT APPLICATION

(11) **EP 4 749 058 A1**
(43) Date of publication of application: **27.05.2026**
(21) Application number: 25171556.1
(22) Date of filing: 22.04.2025
(51) Int. Cl.: E04H 4/16

(54) **CLEANING ROBOT FOR SWIMMING POOL**

(30) Priority: 21.11.2024 CN 202411667624
(71) Applicant: Yunda H&H Tech (Tianjin) Co., Ltd., Tianjin 301600 (CN)
(72) Inventor: WEI, Enyu, Tianjin, 301600 (CN); XU, Hao, Tianjin, 301600 (CN); ZHANG, Huixin, Tianjin, 301600 (CN); ZHAO, Dongdong, Tianjin, 301600 (CN); CHE, Wenyang, Tianjin, 301600 (CN)
(74) Representative: Seemann & Partner Patentanwälte mbB

(57) **Abstract**

A cleaning robot for a swimming pool is provided. A steering determination module is arranged inside the cleaning robot. The steering determination module includes a gyroscope. During a driving process of the cleaning robot: if the gyroscope monitors an increase in instantaneous acceleration, it is determined that the cleaning robot hits a wall, and the cleaning robot steers after a preset period of steering time; if the gyroscope monitors a change in a climbing angle, and the climbing angle exceeds a preset angle, it is determined that the cleaning robot climbs, and the cleaning robot steers after the preset period of steering time; and if the gyroscope monitors that continuous vibration occurs and the continuous vibration lasts over a preset period of vibration time, it is determined that the cleaning robot encounters an obstacle, and the cleaning robot steers after the preset period of steering time.

## Description

### TECHNICAL FIELD

The present invention relates to the technical field of cleaning robots, in particular to a cleaning robot for a swimming pool.

### BACKGROUND

Dust, impurities, garbage and the like frequently enter into the swimming pool to cause the pollution of swimming pool environment and affect the player experience, so the swimming pool needs to be cleaned periodically. At present, most swimming pools cleaned by manpower are low in cleaning efficiency and difficult to clean thoroughly. Therefore, underwater robots capable of cleaning the floor of the swimming pool have gradually appeared on the market. Using underwater robots can not only save manpower, but also clean more thoroughly.

When the swimming pool is cleaned by the cleaning robot for the swimming pool, in order to achieve the cleaning effect without dead angle, the key is to design the cleaning path of the cleaning robot for the swimming pool. When the cleaning path is designed, in order to make the cleaning robot for the swimming pool steer in time after hitting a wall, a built-in sensor is usually arranged in the cleaning robot for the swimming pool to judge whether the cleaning robot hits a wall or not. At present, the sensor is generally a wall-touching sensing assembly composed of a Hall sensor. As disclosed in the wall-touching sensing assembly with the Chinese Patent Application Publication No. CN116065862A entitled "swimming pool cleaner", the wall-touching sensing assembly includes a Hall sensing probe and a swing member. The swing member includes a resistance plate and a magnet installed on the resistance plate. The resistance plate is located in a wall-touching detection water channel which penetrates from front to back. When the swimming pool cleaner runs normally, a water flow flows through the wall-touching detection water channel, and the resistance plate is deflected under the push of the water flow. Then the resistance plate gets away from the Hall sensing probe together with the magnet, so that the Hall sensing probe cannot sense the magnet. At this time, it is determined that the swimming pool cleaner runs normally, so the swimming pool cleaner does not need to steer. When the swimming pool cleaner touches a wall, no water flows through the wall-touching detection water channel, and the resistance plate is not deflected. The magnet droops to get close to the Hall sensing probe under the action of gravity, the Hall sensing probe can sense the magnet. and it is determined that the swimming pool cleaner touches a wall, so the swimming pool cleaner needs to steer.

However, after practical use, it is found that there are many problems in the above-mentioned Hall sensing wall-touching sensing assembly. Firstly, when the cleaning robot for the swimming pool normally runs on a road with a high-angle slope, the speed of the cleaning robot for the swimming pool slowly stops on the slope. Under normal circumstances, the cleaning robot for the swimming pool should reverse downhill, but due to the existence of the slope, the magnet always hangs down to get close to the Hall sensing probe under the action of gravity. The controller determines that the cleaning robot runs normally at this time, and the cleaning robot for the swimming pool does not need to reverse, resulting in that the cleaning robot for the swimming pool is stuck on the slope. Secondly, dirt, such as iron slag, is absorbed by the magnet after a long period of time, resulting in that the resistance plate is stuck and cannot swing, thereby losing its function.

### SUMMARY

With the purpose of solving the above-mentioned technical problems, the present invention provides a cleaning robot for a swimming pool. A gyroscope is used as the basis of steering logic judgment. The change in instantaneous acceleration, change in a climbing angle and continuous vibration are monitored by the gyroscope to determine whether the cleaning robot hits a wall, climbs and encounters an obstacle. The determination method is more reasonable and cannot cause the problem of swing failure easily appearing in the traditional Hall sensing assembly, so that the risk that the cleaning robot for the swimming pool cannot steer under special circumstances is reduced.

In order to realize the above-mentioned purpose, the present invention provides the following scheme. A cleaning robot for a swimming pool is provided. A steering determination module is arranged inside the cleaning robot for the swimming pool, the steering determination module includes a gyroscope, during a driving process of the cleaning robot for the swimming pool:
if the gyroscope monitors an increase in instantaneous acceleration of the cleaning robot for the swimming pool, it is determined that the cleaning robot for the swimming pool hits a wall, and the cleaning robot for the swimming pool steers after a preset period of steering time;
if the gyroscope monitors a change in a climbing angle of the cleaning robot for the swimming pool, and the climbing angle exceeds a preset angle, it is determined that the cleaning robot for the swimming pool climbs, and the cleaning robot for the swimming pool steers after the preset period of steering time; and
if the gyroscope monitors that continuous vibration of the cleaning robot for the swimming pool occurs and the continuous vibration lasts over a preset period of vibration time, it is determined that the cleaning robot for the swimming pool encounters an obstacle, and the cleaning robot for the swimming pool steers after the preset period of steering time.

In some embodiments, the cleaning robot for the swimming pool includes a housing having travelling wheels, a filter screen is arranged inside the housing, the filter screen divides space in the housing into a water outlet cavity and a water inlet cavity distributed up and down, water inlets in communication with the water inlet cavity are formed at a bottom of the housing, two water outlet flow channels with opposite water outlet directions are formed inside the water outlet cavity, each of the water outlet flow channels includes a spiral portion, a bending portion and a linear flowing portion connected in sequence, a bending direction of the bending portion is opposite to a spiral direction of the spiral portion, the linear flowing portion is connected with a water outlet, the water outlet cavity is in communication with an outside through the water outlet, an orientation of the water outlet is perpendicular to a wheel axle direction of the travelling wheels, the water outlet is hinged with a closing plate capable of rising, an impeller is arranged in the spiral portion, an inlet of the impeller is in communication with the water inlet cavity, an outlet of the impeller is in communication with the spiral portion, a closed control cabin is arranged in the water inlet cavity, and the steering determination module is arranged inside the closed control cabin.

In some embodiments, the closing plate has a rising angle of greater than 90 degrees.

In some embodiments, a rising sloping bottom is arranged at an end, connected to the water outlet, of the linear flowing portion.

In some embodiments, a splitter plate parallel to an extension direction of the linear flowing portion is arranged inside the linear flowing portion, the splitter plate extends to the water outlet.

In some embodiments, the water outlet is of a flared structure.

In some embodiments, one of the water inlets is formed at each of two ends, parallel to a travelling direction, of the housing.

In some embodiments, scraping plates are arranged at the bottom of the housing, the scraping plates are respectively located at back of the water inlets along the travelling direction of the housing.

In some embodiments, the impeller is driven by a drive motor, the drive motor is installed inside the closed control cabin.

In some embodiments, the cleaning robot for the swimming pool includes a water entry determination module, the water entry determination module includes a monitoring device for monitoring current of a drive motor;
in a water entry stage of the cleaning robot for the swimming pool, within a preset period of water entry time, the monitoring device monitors the current of the drive motor, if the current increases, it is determined that water entry is normal, and if the current does not change, it is determined that the water entry is abnormal; and
in a water exit stage of the cleaning robot for the swimming pool, within a preset period of water exit time, the monitoring device monitors the current of the drive motor, if the current decreases, it is determined that water exit is normal, and if the current does not change, it is determined that the water exit is abnormal.

Compared with the prior art, the present invention achieves the following technical effects.

The steering determination module of the cleaning robot for the swimming pool uses the gyroscope as the basis of steering logic judgment. The change in instantaneous acceleration, change in a climbing angle and continuous vibration for the cleaning robot for the swimming pool are monitored by the gyroscope to determine whether the cleaning robot hits a wall, climbs and encounters an obstacle. The determination method is more reasonable and cannot cause the problem of swing failure, caused by climbing and magnet adsorption of slag, easily appearing in the traditional Hall sensing assembly, so that the risk that the cleaning robot for the swimming pool cannot steer can be significantly reduced.

### BRIEF DESCRIPTION OF THE DRAWINGS

To more clearly illustrate the technical schemes in embodiments of the present invention or in the prior art, the following briefly introduces the attached figures to be used in the embodiments. Apparently, the attached figures in the following description show merely some embodiments of the present invention, and those skilled in the art can still derive other drawings from these attached figures without creative efforts.
FIG. 1 is a steering determination logic schematic diagram of a cleaning robot for a swimming pool in embodiments;
FIG. 2 is a water entry determination logic schematic diagram of the cleaning robot for the swimming pool in embodiments;
FIG. 3 is a front-view three-dimensional structure diagram of a cleaning robot for a swimming pool in an embodiment (embodiment I );
FIG. 4 is a rear-view three-dimensional structure diagram of the cleaning robot for the swimming pool in the embodiment (embodiment I );
FIG. 5 is a bottom-view three-dimensional structure diagram of the cleaning robot for the swimming pool in the embodiment (embodiment I );
FIG. 6 is an internal top-view three-dimensional diagram of the cleaning robot for the swimming pool in the embodiment (embodiment I );
FIG. 7 is an internal bottom-view three-dimensional diagram of the cleaning robot for the swimming pool in the embodiment (embodiment I );
FIG. 8 is an internal bottom-view structure diagram of the cleaning robot for the swimming pool in the embodiment (embodiment I );
FIG. 9 is a three-dimensional structure diagram of water outlet flow channels in embodiments;
FIG. 10 is a top-view structure diagram of water outlet flow channels in embodiments;
FIG. 11 is a section-view structure diagram of water outlet flow channels in embodiments;
FIG. 12 is a front-view three-dimensional structure diagram of a cleaning robot for a swimming pool in an embodiment (embodiment II);
FIG. 13 is a rear-view three-dimensional structure diagram of the cleaning robot for the swimming pool in the embodiment (embodiment II);
FIG. 14 is a bottom-view three-dimensional structure diagram of the cleaning robot for the swimming pool in the embodiment (embodiment II);
FIG. 15 is an internal bottom-view structure diagram of the cleaning robot for the swimming pool in the embodiment (embodiment II);
FIG. 16 is a front-view three-dimensional structure diagram of a cleaning robot for a swimming pool in an embodiment (embodiment III);
FIG. 17 is a rear-view three-dimensional structure diagram of the cleaning robot for the swimming pool in the embodiment (embodiment III);
FIG. 18 is a bottom-view three-dimensional structure diagram of the cleaning robot for the swimming pool in the embodiment (embodiment III);
FIG. 19 is a front-view three-dimensional structure diagram of a cleaning robot for a swimming pool in an embodiment (embodiment IV);
FIG. 20 is a rear-view three-dimensional structure diagram of the cleaning robot for the swimming pool in the embodiment (embodiment IV); and
FIG. 21 is a bottom-view three-dimensional structure diagram of the cleaning robot for the swimming pool in the embodiment (embodiment IV).

Reference signs in attached figures: 1 upper housing; 2 lower housing; 3 travelling wheel; 4 closing plate; 5 impeller; 6 filter screen; 7 control cabin; 8 counter weight; 9 buckle; 10 indicator light; 11 switch; 12 U-shaped handle; 13 water outlet flow channel; 14 splitter plate; 15 spiral portion; 16 bending portion; 17 linear flowing portion; 18 sloping bottom; 19 water outlet; 20 water inlet; 21 scraping plate; and 22 charging port.

### DETAILED DESCRIPTION OF THE EMBODIMENTS

The following clearly and completely describes the technical schemes in the embodiments of the present invention with reference to the attached figures of the embodiments of the present invention. Apparently, the described embodiments are merely a part rather than all of the embodiments of the present invention. Based on the embodiments in the present invention, all other embodiments acquired by those skilled in the art without creative labor belong to the scope protected by the present invention.

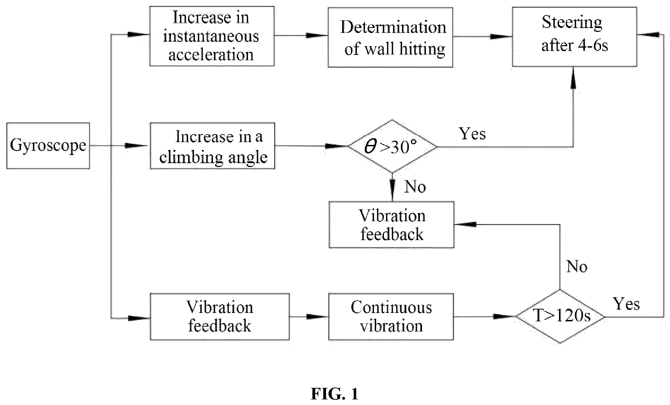

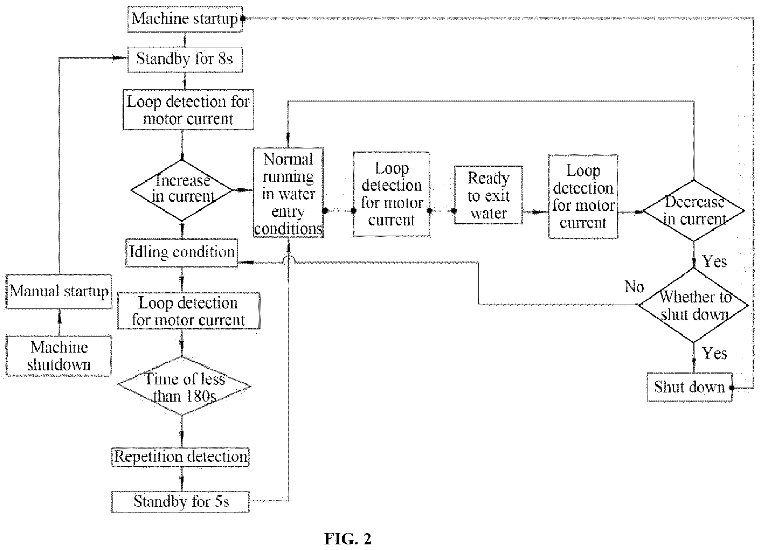

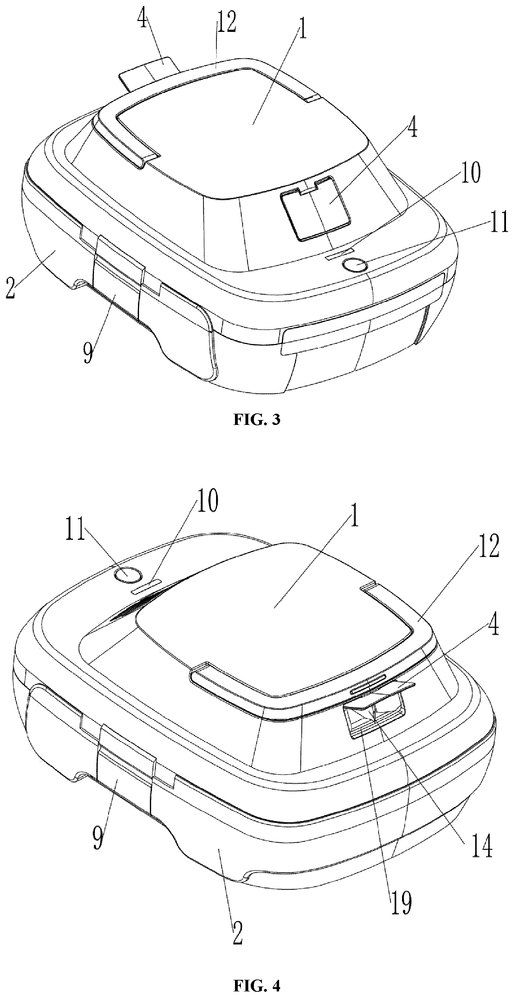

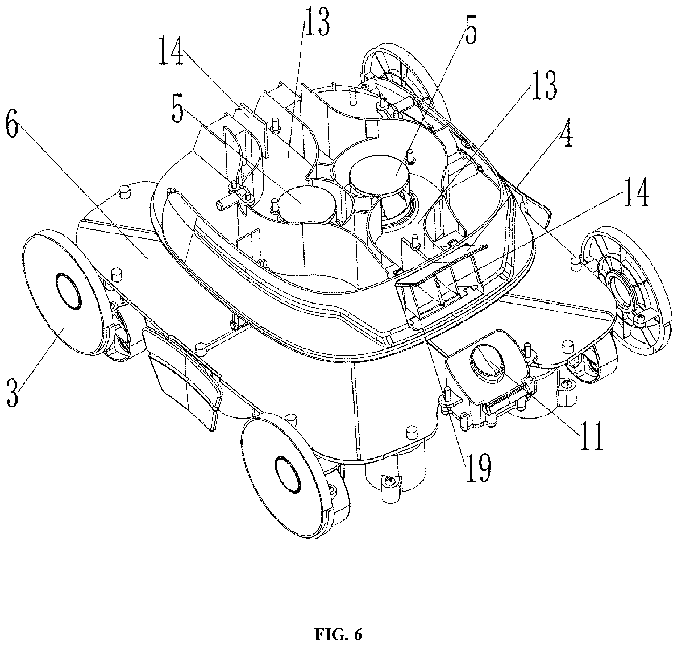

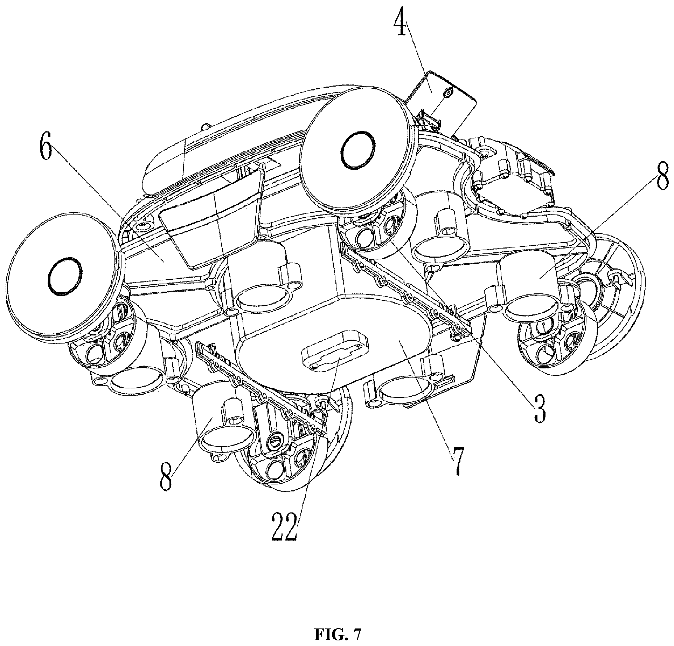

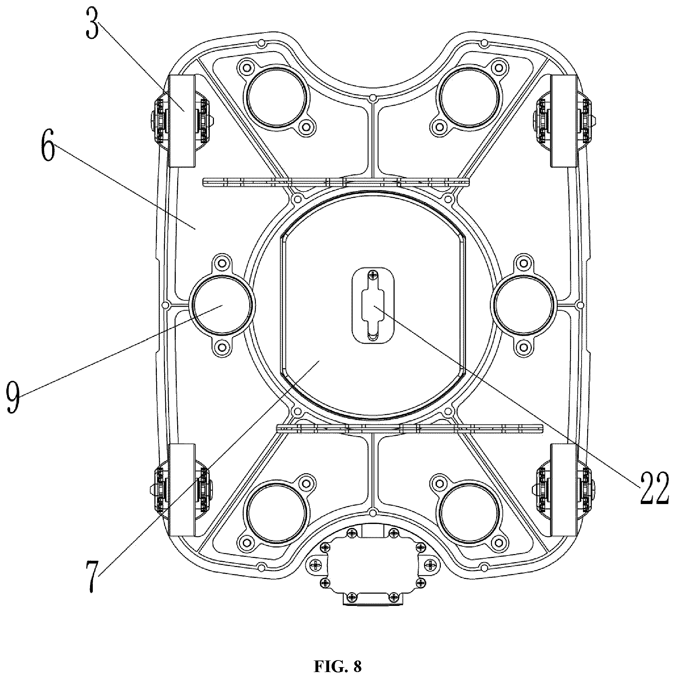

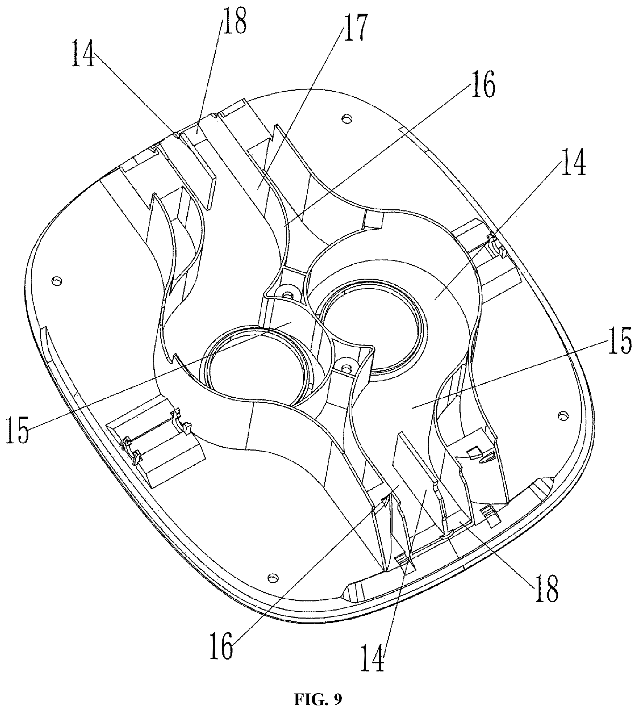

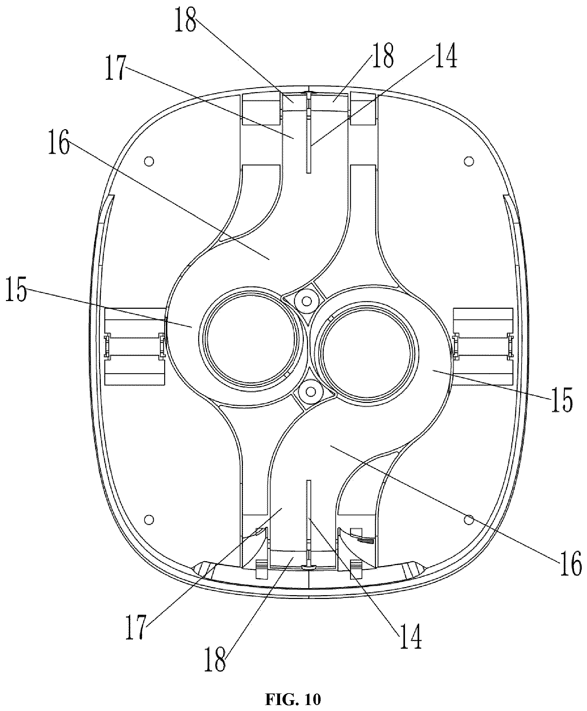

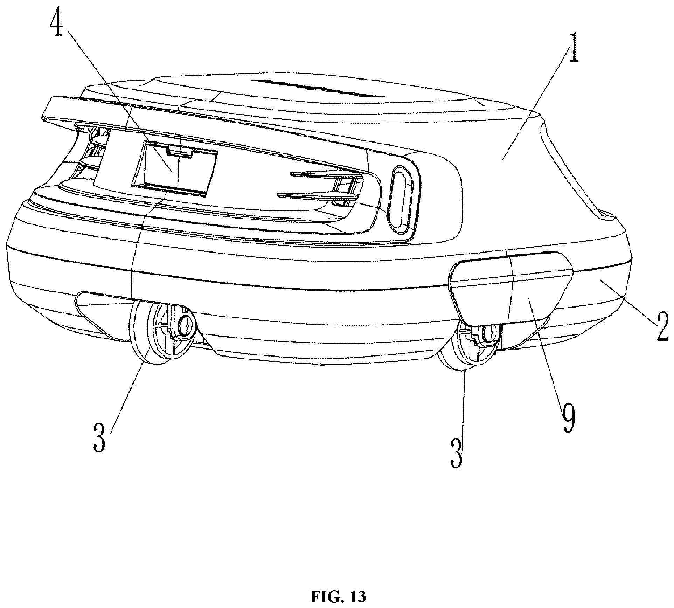

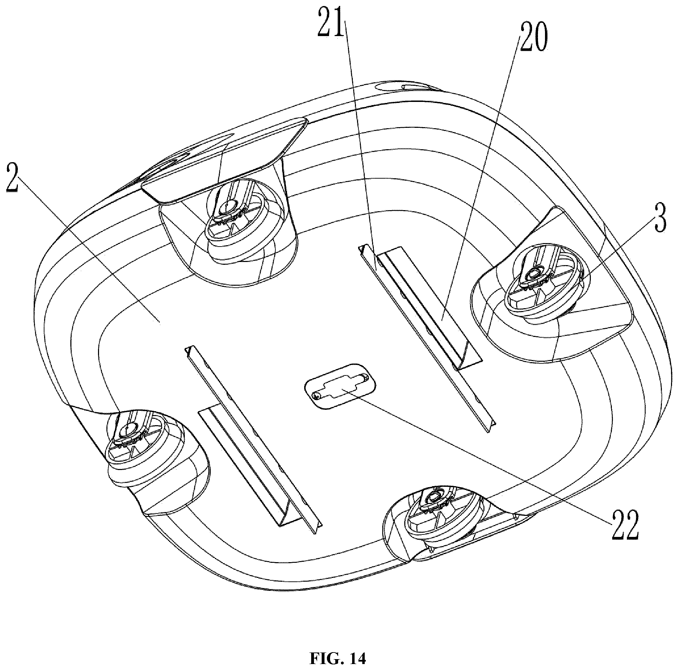

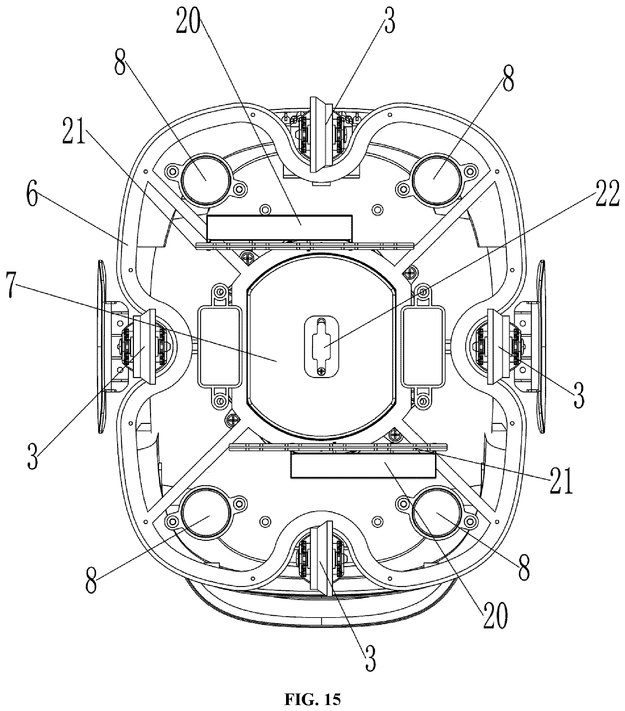

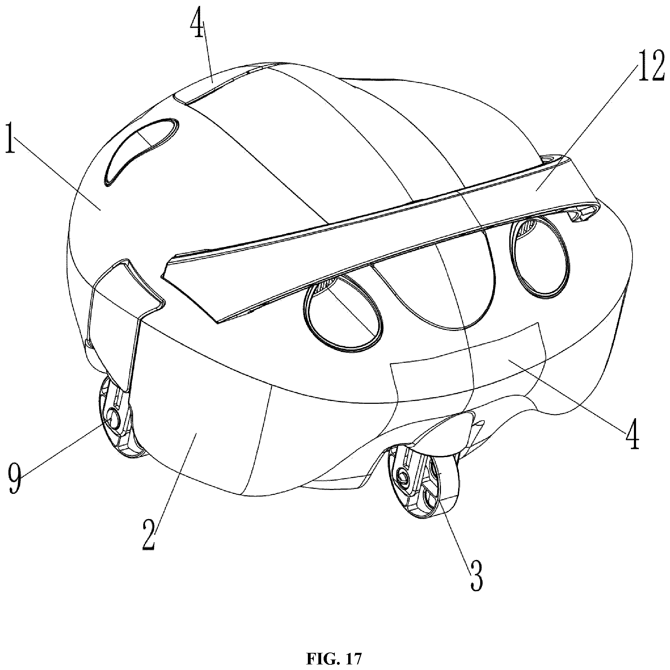

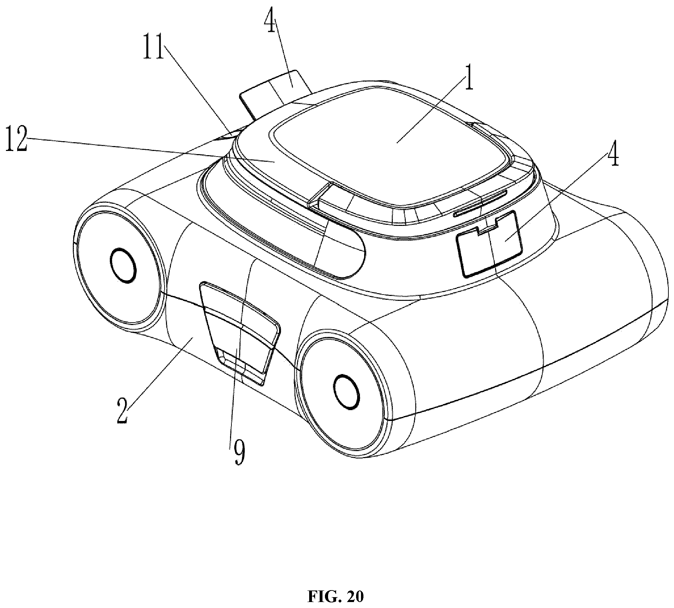

The embodiment provides a cleaning robot for a swimming pool. As shown in FIG. 1 to FIG. 21, a steering determination module is arranged inside the cleaning robot for the swimming pool. The steering determination module includes a gyroscope. During the driving process of the cleaning robot for the swimming pool:
if the gyroscope monitors an increase in instantaneous acceleration of the cleaning robot for the swimming pool, it is determined that the cleaning robot for the swimming pool hits a wall, and the cleaning robot for the swimming pool steers after a preset period of steering time; the preset period of steering time is set according to actual demands, and is preferably 4s to 6s;
if the gyroscope monitors a change in a climbing angle of the cleaning robot for the swimming pool, and the climbing angle exceeds a preset angle, it is determined that the cleaning robot for the swimming pool climbs, and the cleaning robot for the swimming pool steers after the preset period of steering time; the preset angle is experimentally set according to an actual angle that causes the the cleaning robot for the swimming pool to stop, and is generally equal to or greater than 30°; the preset period of steering time is set according to actual demands, and is preferably 4s to 6s;
if the gyroscope monitors that continuous vibration of the cleaning robot for the swimming pool occurs and the continuous vibration lasts over a preset period of vibration time, it is determined that the cleaning robot for the swimming pool encounters an obstacle, and the cleaning robot for the swimming pool steers after the preset period of steering time; the preset period of vibration time is set according to actual situations, and is preferably equal to or greater than 102s; and the preset period of steering time is set according to actual demands, and is preferably 4s to 6s.

In an embodiment, as shown in FIG. 1 to FIG. 21, the cleaning robot for the swimming pool includes a housing. Travelling wheels 3 are arranged on the housing. A filter screen 6 is arranged inside the housing. The filter screen 6 divides space in the housing into a water outlet cavity and a water inlet cavity distributed up and down. Water inlets 20 are formed at the bottom of the housing, and the water inlets 20 communicate with the water inlet cavity. Two water outlet flow channels 13 with opposite water outlet directions are formed inside the water outlet cavity. The water outlet flow channel 13 includes a spiral portion 15, a bending portion 16 and a linear flowing portion 17 connected in sequence. The bending direction of the bending portion 16 is opposite to the spiral direction of the spiral portion 15, so that the linear flowing portion 17 is deflected towards the outer side of the spiral direction of the spiral portion 15. The linear flowing portion 17 is connected with a water outlet 19. The water outlet cavity is in communication with the outside through the water outlet 19. The orientation of the water outlet 19 is perpendicular to the wheel axle direction of the travelling wheels 3, and the water outlet 19 is hinged with a closing plate 4 capable of rising. The spiral portion 15 is provided with an impeller 5. An inlet of the impeller 5 communicates with the water inlet cavity. An outlet of the impeller 5 communicates with the spiral portion 15. A closed control cabin 7 is arranged in the water inlet cavity. The steering determination module is arranged inside control cabin 7.

The working principle is as follows.

Under the circumstance that the impeller 5 is not started, the water outlet 19 is closed by the closing plate 4, and water inside the swimming pool cannot enter into the water outlet flow channels 13. After the impeller 5 is started, centrifugal force is generated, and water inside the swimming pool flows into the water inlet cavity from the water inlets 20. Under the action of the filter screen 6, impurities retain in the water inlet cavity to achieve the cleaning of the swimming pool. Water entering into the water inlet cavity enters into the spiral portion 15 of the water outlet cavity under the suction of the impeller 5 and then flows to the water outlet 19 from the bending portion 16 and the linear flowing portion 17 in sequence. The water is discharged out of the housing after lifting the closing plate 4 of the water outlet 19. The water outlet direction of the water outlet 19 is perpendicular to the wheel axle direction of the travelling wheels 3, namely opposite to the travelling direction of the travelling wheels 3. Therefore, the cleaning robot for the swimming pool can be driven to travel with the counter-acting force of a water flow discharged at the water outlet 19. Meanwhile, the water flow out of the spiral portion 15 is forced to be deflected to flow to the linear flowing portion 17 after being impacted to the bending portion 16, so the water flow can apply acting force in the spiral direction of the spiral portion 15 to the bending portion 16. The acting force can drive the cleaning robot for the swimming pool to deflected and steered to a certain extent, and finally the cleaning robot for the swimming pool can travel in front left and front right directions in combination with the counter-acting force of the water outlet 19 and the deflecting force of the bending portion 16. Different travelling directions can be controlled by controlling the start and stop of the impellers 5 inside the two water outlet flow channels 13, and then a zigzag travelling path of the cleaning robot for the swimming pool is formed in the swimming pool to cover a bottom region inside the swimming pool. The swimming pool is thoroughly cleaned. The cleaning robot for the swimming pool can steer when hitting a wall, climbing and encountering an obstacle in cooperation with the gyroscope.

In an embodiment, as shown in FIG. 1 to FIG. 21, the closing plate 4 has a rising angle of greater than 90 degrees. If the closing plate 4 has a rising angle of smaller than 90 degrees, the water outlet direction of the water outlet 19 will be downward. The cleaning robot for the swimming pool is subjected to upward counter-acting force, which results in a rising cleaning robot for the swimming pool, so that the ground adhesiveness of the cleaning robot for the swimming pool is reduced, and the cleaning effect and the travelling stability are influenced.

In an embodiment, as shown in FIG. 1 to FIG. 21, a rising sloping bottom 18 is arranged at an end, connected to the water outlet 19, of the linear flowing portion 17, so that the water outlet 19 has an upper water outlet direction and the water flow rises. Downward counter-acting force is given to the cleaning robot for the swimming pool to ensure the ground adhesiveness of the cleaning robot for the swimming pool, so that the cleaning effect and the travelling stability are ensured.

In an embodiment, as shown in FIG. 1 to FIG. 21, a splitter plate 14 parallel to the extension direction of the linear flowing portion 17 is arranged inside the linear flowing portion 17, the splitter plate 14 extends to the water outlet 19. The splitter plate 14 can divide the outlet water flow and play a turbulent role. In addition, an effective support structure can be formed to keep the unobstruction and structure stability of the water outlet flow channel 13.

In an embodiment, as shown in FIG. 1 to FIG. 21, the water outlet 19 is of a flared structure, and is convenient for the diffusion of the water flow.

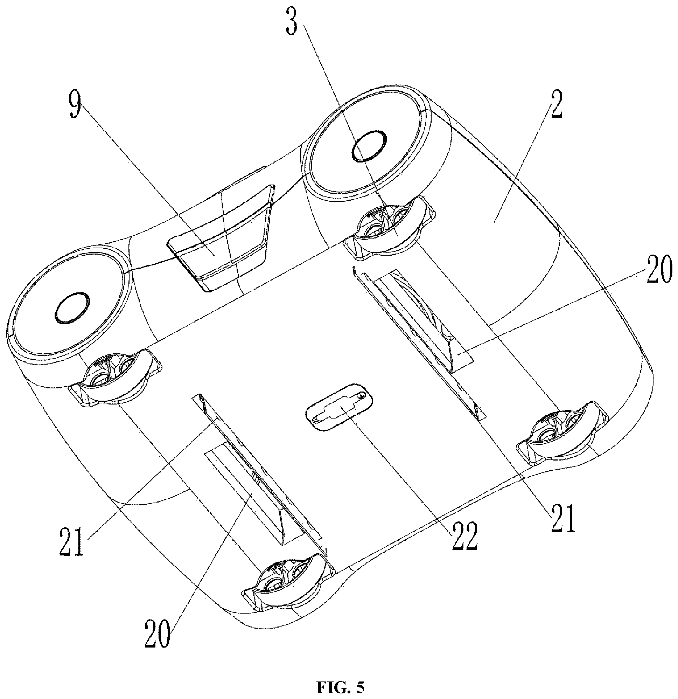

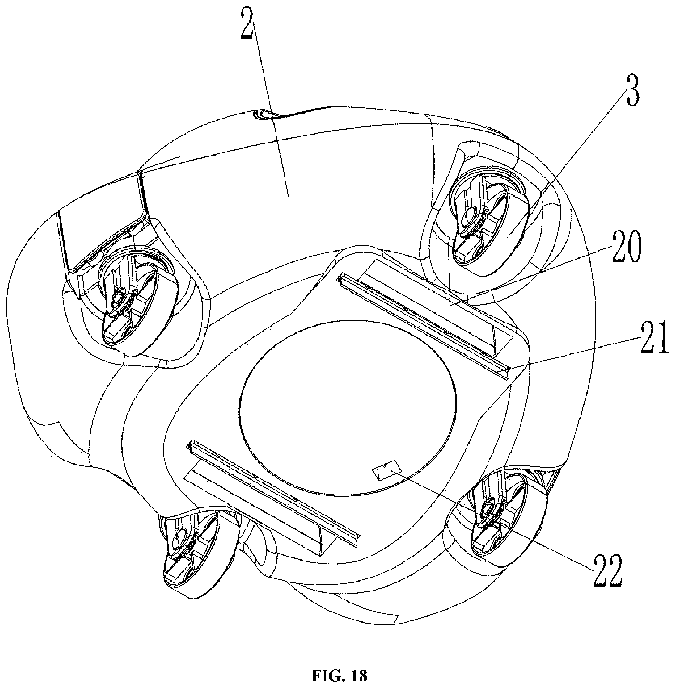

In an embodiment, as shown in FIG. 1 to FIG. 21, one of the water inlets 20 is formed at each of two ends, parallel to a travelling direction, of the housing. One of the water inlets 20 is formed at a front end of the housing, and the other one of the water inlets 20 is formed at a rear end of the housing. The water inlets 20 are formed in a center line of the housing at the front end and the rear end, as shown in FIG. 18. The water inlets 20 can also be formed to be one to the left and one to the right, as shown in FIG. 5, FIG. 14 and FIG. 21. The cleaning robot for the swimming pool travels zigzag, so the cleaning robot for the swimming pool can be deflected in the travelling process. The cleaning robot for the swimming pool can move left and right in cooperation with the left and right water inlets 20, so that the water inlets 20 are formed in an outer diameter side of a deflection radian. Therefore, dirt on the ground of the swimming pool is preferably cleaned in cooperation with the travelling direction.

In an embodiment, as shown in FIG. 1 to FIG. 21, scraping plates 21 are arranged at the bottom of the housing, and the scraping plates 21 are respectively located at the back of the water inlets 20 along the travelling direction of the housing. Sundries or dirt attached to the bottom of the swimming pool can be scraped or floated by the scraping plate 21, which is beneficial for being sucked in by the water inlets 20, so that the dirt on the ground of the swimming pool is preferably cleaned. The water inlet 20 may be in the form of an elongated opening. The scraping plate 21 is parallel to the length direction of the water inlet 20, and the length of the scraping plate 21 is slightly larger than that of the water inlet 20, so that a larger cleaning area can be covered, and dirt can be preferably collected and sucked by the water inlet 20.

In an embodiment, as shown in FIG. 1 to FIG. 21, the impeller 5 is driven by a drive motor.

In an embodiment, as shown in FIG. 1 to FIG. 21, the cleaning robot for the swimming pool includes a water entry determination module. The water entry determination module includes a monitoring device for monitoring the current of the drive motor. The monitoring device can be a sensor capable of monitoring motor current in the market. The monitoring device is installed inside the control cabin 7.

In a water entry stage of the cleaning robot for the swimming pool, within a preset period of water entry time, the monitoring device monitors the current of the drive motor, if the current increases, it is determined that the water entry is normal, and if the current does not change, it is determined that the water entry is abnormal.

In a water exit stage of the cleaning robot for the swimming pool, within a preset period of water exit time, the monitoring device monitors the current of the drive motor, if the current decreases, it is determined that the water exit is normal, and if the current does not change, it is determined that the water exit is abnormal.

Specifically, after the cleaning robot for the swimming pool is started and the cleaning robot for the swimming pool is standby for a certain period of time (such as 8s), the cleaning robot for the swimming pool enters water normally, and the monitoring device monitors the current of the drive motor. If the current of the drive motor increases, it is determined that the water entry is normal and the cleaning robot for the swimming pool can work normally. If the current of the drive motor does not increase, the water entry is abnormal, the drive motor remains idling, and continuous monitoring can be carried out later. If it is not detected that the current of the drive motor increases within a preset period of monitoring time (such as 180s), the cleaning robot for the swimming pool enters a shutdown state. If it is detected that the current of the drive motor increases within the preset period of monitoring time (such as 180s), the cleaning robot for the swimming pool enters a standby state, and after the preset period of standby time (such as 5s), it is determined that the water entry is normal and the cleaning robot for the swimming pool can work normally. When the cleaning robot for the swimming pool finishes the work and is ready to exit water, the monitoring device monitors the current of the drive motor. If the current of the drive motor becomes smaller, it is determined that the water exit is normal. When the water exit is normal, the cleaning robot for the swimming pool can be shut down or the drive motor enters an idle state.

In an embodiment, as shown in FIG. 1 to FIG. 21, a control module is arranged inside the control cabin 7. The control module includes a single chip microcomputer or other controllers, and is configured for receiving signals detected by the monitoring device and the gyroscope and controlling start and stop of the drive motor.

In an embodiment, as shown in FIG. 1 to FIG. 21, the housing can be provided in a separated arrangement, which facilitates disassembly, installation and connection, and facilitates installation of internal components and cleaning of dirty impurities after being disassembled. For example, the housing can include an upper housing 1 and a lower housing 2 which are buckled through a buckle 9. The upper housing 1 and the lower housing 2 can be disconnected by pulling the buckle 9 outwards during disassembly, so that installation and disassembly are convenient. The water inlets 20 are formed in the lower housing 2, and the water outlets 19 are formed in the upper housing 1. The control cabin 7 is located in the lower housing 2.

In an embodiment, as shown in FIG. 1 to FIG. 21, a battery for supplying a power supply is arranged inside the control cabin 7. The battery is charged by means of a charging port 22 formed in the bottom of the lower housing 2.

In an embodiment, as shown in FIG. 1 to FIG. 21, a switch 11 is arranged outside the upper housing 1. The upper housing 1 is provided with or not provided with an indicator light 10 selectively.

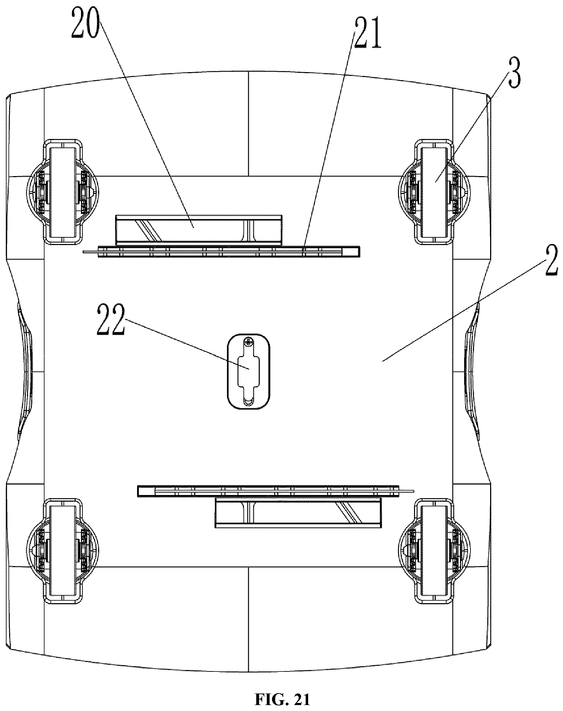

In an embodiment, as shown in FIG. 1 and FIG. 21, counter weights 8 can also be arranged around the control cabin 7 in the lower housing 2. The counter weights 8 are used for increasing the overall weight of the cleaning robot for the swimming pool, so that the influence of water buoyancy and water flow impact is overcome, and the cleaning robot for the swimming pool is ensured to move smoothly at the bottom of the swimming pool for cleaning.

In an embodiment, as shown in FIG. 1 to FIG. 21, the top of the housing (upper housing 1) is provided with a U-shaped handle 12. Two legs of the U-shaped handle 12 are hinged to the upper housing 1. The top of the U-shaped handle 12 is hollow. The hollow part can be subjected to the buoyancy of water, so that the top of the U-shaped handle 12 can naturally float up to a vertical state. When the cleaning robot for the swimming pool needs to be taken out for charging or maintenance, the U-shaped handle 12 can be conveniently clamped by tools. The cleaning robot for the swimming pool at the bottom of the swimming pool is convenient to grab, so that the convenience in operation is improved.

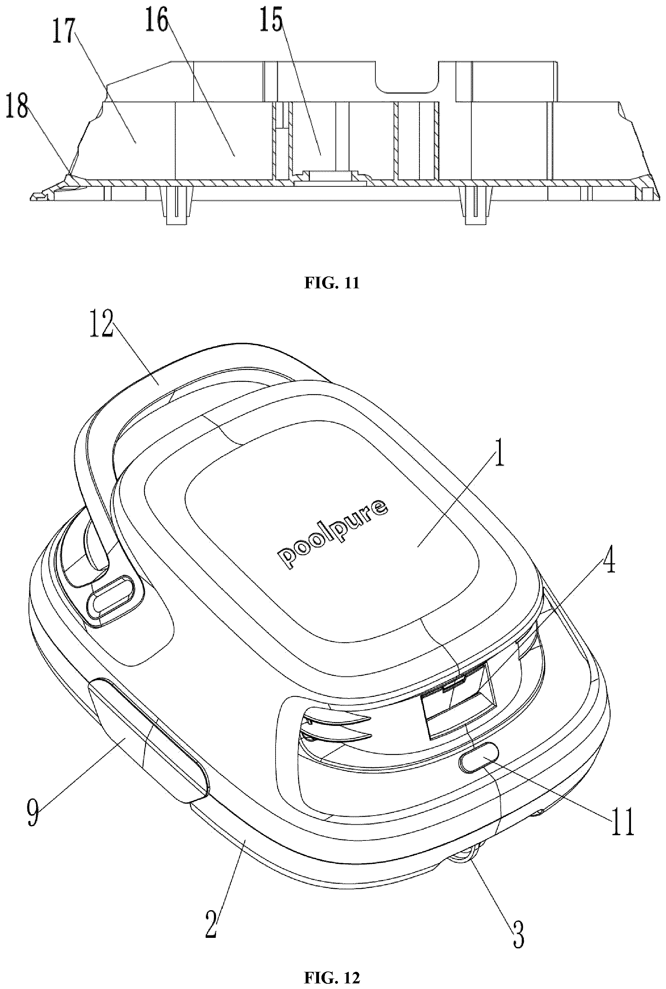

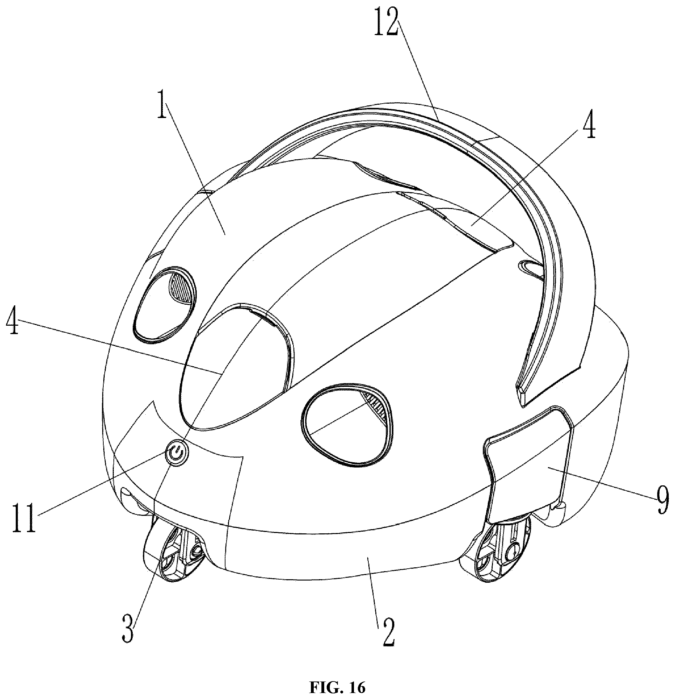

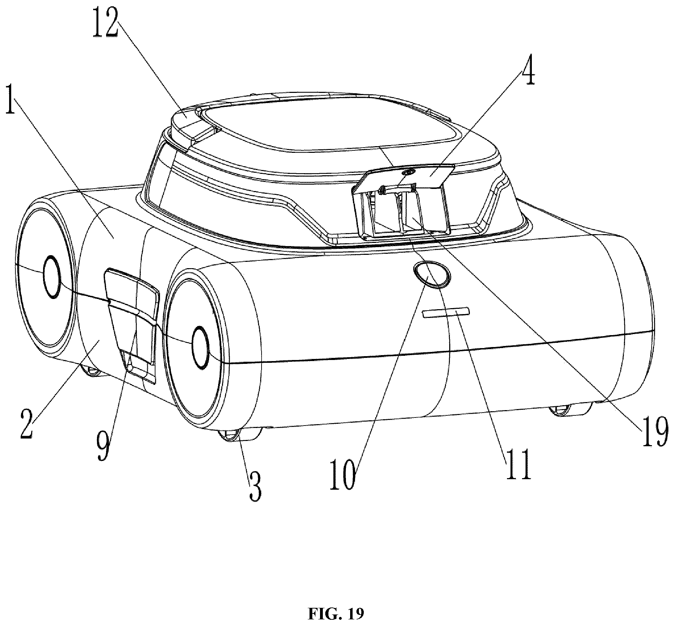

In an embodiment, as shown in FIG. 1 to FIG. 21, the shape of the housing of the cleaning robot for the swimming pool may be set according to the need, such as the cleaning robot for the swimming pool according to embodiment I in FIG. 1 to FIG. 8, the cleaning robot for the swimming pool according to embodiment II in FIG. 12 to FIG. 15, the cleaning robot for the swimming pool according to embodiment III in FIG. 16 and FIG. 18, and the cleaning robot for the swimming pool according to embodiment IV in FIG. 19 to FIG. 21.

In an embodiment, as shown in FIG. 1 to FIG. 21, there are four travelling wheels 3 of the cleaning robot for the swimming pool, and the four travelling wheels 3 are arranged in two ways. In one way, the travelling wheels are arranged in a rectangular shape and distributed at the bottom of the cleaning robot for the swimming pool, such as the cleaning robot for the swimming pool according to embodiment I and the cleaning robot for the swimming pool according to embodiment IV. In the other way, the four travelling wheels 3 are arranged in a cross shape and distributed at the bottom of the cleaning robot for the swimming pool according to embodiment II and embodiment III. The difference between the cleaning robot for the swimming pool with the travelling wheels 3 arranged in a rectangular shape and the cleaning robot for the swimming pool with the travelling wheels 3 arranged in a cross shape lies in a steering angle, that is, the travelling path formed by the travelling wheels 3 arranged in a cross shape is closer to a zigzag, and the travelling path formed by the travelling wheels 3 arranged in a rectangular shape is also zigzag but is relatively close to a straight line.

Specific examples are used for illustration of the principles and implementation methods of the present invention. The description of the above-mentioned embodiments is used to help illustrate the method and its core principles of the present invention. In addition, those skilled in the art can make various modifications in terms of specific embodiments and scope of application in accordance with the teachings of the present invention. In summary, the contents of this specification should not be understood as the limitation of the present invention.

## Claims

1. A cleaning robot for a swimming pool, wherein a steering determination module is arranged inside the cleaning robot for the swimming pool, the steering determination module comprises a gyroscope, during a driving process of the cleaning robot for the swimming pool:
if the gyroscope monitors an increase in instantaneous acceleration of the cleaning robot for the swimming pool, it is determined that the cleaning robot for the swimming pool hits a wall, and the cleaning robot for the swimming pool steers after a preset period of steering time;
if the gyroscope monitors a change in a climbing angle of the cleaning robot for the swimming pool, and the climbing angle exceeds a preset angle, it is determined that the cleaning robot for the swimming pool climbs, and the cleaning robot for the swimming pool steers after the preset period of steering time; and
if the gyroscope monitors that continuous vibration of the cleaning robot for the swimming pool occurs and the continuous vibration lasts over a preset period of vibration time, it is determined that the cleaning robot for the swimming pool encounters an obstacle, and the cleaning robot for the swimming pool steers after the preset period of steering time.

2. The cleaning robot for the swimming pool according to claim 1, wherein the cleaning robot for the swimming pool comprises a housing having travelling wheels, a filter screen is arranged inside the housing, the filter screen divides space in the housing into a water outlet cavity and a water inlet cavity distributed up and down, water inlets in communication with the water inlet cavity are formed at a bottom of the housing, two water outlet flow channels with opposite water outlet directions are formed inside the water outlet cavity, each of the water outlet flow channels comprises a spiral portion, a bending portion and a linear flowing portion connected in sequence, a bending direction of the bending portion is opposite to a spiral direction of the spiral portion, the linear flowing portion is connected with a water outlet, the water outlet cavity is in communication with an outside through the water outlet, an orientation of the water outlet is perpendicular to a wheel axle direction of the travelling wheels, the water outlet is hinged with a closing plate capable of rising, an impeller is arranged in the spiral portion, an inlet of the impeller is in communication with the water inlet cavity, an outlet of the impeller is in communication with the spiral portion, a closed control cabin is arranged in the water inlet cavity, and the steering determination module is arranged inside the closed control cabin.

3. The cleaning robot for the swimming pool according to claim 2, wherein the closing plate has a rising angle of greater than 90 degrees.

4. The cleaning robot for the swimming pool according to claim 3, wherein a rising sloping bottom is arranged at an end, connected to the water outlet, of the linear flowing portion.

5. The cleaning robot for the swimming pool according to any one of claims 2 to 4, wherein a splitter plate parallel to an extension direction of the linear flowing portion is arranged inside the linear flowing portion, the splitter plate extends to the water outlet.

6. The cleaning robot for the swimming pool according to claim 5, wherein the water outlet is of a flared structure.

7. The cleaning robot for the swimming pool according to claim 2, wherein one of the water inlets is formed at each of two ends, parallel to a travelling direction, of the housing.

8. The cleaning robot for the swimming pool according to claim 7, wherein scraping plates are arranged at the bottom of the housing, the scraping plates are respectively located at back of the water inlets along the travelling direction of the housing.

9. The cleaning robot for the swimming pool according to claim 2, wherein the impeller is driven by a drive motor, the drive motor is installed inside the closed control cabin.

10. The cleaning robot for the swimming pool according to claim 2, comprising a water entry determination module, wherein the water entry determination module comprises a monitoring device for monitoring current of a drive motor;
wherein in a water entry stage of the cleaning robot for the swimming pool, within a preset period of water entry time, the monitoring device monitors the current of the drive motor, if the current increases, it is determined that water entry is normal, and if the current does not change, it is determined that the water entry is abnormal; and
wherein in a water exit stage of the cleaning robot for the swimming pool, within a preset period of water exit time, the monitoring device monitors the current of the drive motor, if the current decreases, it is determined that water exit is normal, and if the current does not change, it is determined that the water exit is abnormal.
